# EUROPÄISCHE PATENTSCHRIFT

(11) **EP 2 768 782 B1**
(45) Veröffentlichungstag und Bekanntmachung des Hinweises auf die Patenterteilung: **12.12.2018**
(21) Anmeldenummer: 12791257.4
(22) Anmeldetag: 11.10.2012
(51) Int. Cl.: C03C 17/36, F24C 15/10

(54) **VERFAHREN ZUR HERSTELLUNG EINER KOCHFELDVORRICHTUNG**
METHOD FOR MANUFACTURING A COOKING HOB
PROCÉDÉ DE FABRICATION D'UN PLAN DE CUISSON

(30) Priorität: 21.10.2011 ES 201131701 P
(43) Veröffentlichungstag der Anmeldung: 27.08.2014
(73) Patentinhaber: BSH Hausgeräte GmbH, 81739 München (DE)
(72) Erfinder: ALAMAN AGUILAR, Jorge, 50008 Zaragoza (ES); ALCALA BORAO, Raquel, 50013 Zaragoza (ES); ARTAL LAHOZ, Maria Carmen, 50007 Zaragoza (ES); BUÑUEL MAGDALENA, Miguel Angel, 50017 Zaragoza (ES); PEREZ CABEZA, Pilar, 50008 Zaragoza (ES); PLANA LAYUNTA, Fernando, 50009 Zaragoza (ES); ROMEO VELILLA, Rosario, 50008 Zaragoza (ES)
(86) Internationale Anmeldenummer: PCT/IB2012/055493
(87) Internationale Veröffentlichungsnummer: WO 2013/057633

(56) Entgegenhaltungen:
- EP-A1- 2 141 133
- EP-A1- 2 223 900
- EP-A1- 2 592 056
- WO-A1-2011/085996
- DE-A1-102004 041 695
- DE-A1-102009 004 783

## Beschreibung

Die Erfindung geht aus von einem Verfahren zur Herstellung einer Kochfeldvorrichtung nach dem Oberbegriff des Anspruchs 1.

Die Druckschrift EP 2 592 056 A1 offenbart ein Verfahren zur Herstellung einer Kochfeldvorrichtung mit zumindest einer zumindest teilweise transparenten Fronteinheit, insbesondere Plattenfronteinheit, und zumindest einer Strukturschicht, die auf zumindest einem Teilbereich der Fronteinheit angeordnet und dazu vorgesehen ist, eine strukturierte Oberfläche bereitzustellen, wobei die Strukturschicht durch Auftragung einer Flüssigkeit auf die Fronteinheit gebildet wird, wobei die Strukturschicht durch Verteilung der Flüssigkeit mit einem pinselartigen Strukturwerkzeug hergestellt wird.

Es ist auch bekannt, Kochfeldplatten vor einer Beschichtung, die zu einer reflektierenden Schicht führt, mechanisch aufzurauen.

Die Aufgabe der Erfindung besteht insbesondere darin, eine gattungsgemäße Vorrichtung mit vereinfachtem Produktionsprozess bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Verfahren zur Herstellung einer Kochfeldvorrichtung mit zumindest einer zumindest teilweise transparenten Fronteinheit, insbesondere Plattenfronteinheit, und zumindest einer Strukturschicht, die auf zumindest einem Teilbereich der Fronteinheit angeordnet und dazu vorgesehen ist, eine strukturierte Oberfläche bereitzustellen, wobei die Strukturschicht durch Auftragung einer Flüssigkeit auf die Fronteinheit gebildet wird, wobei die Strukturschicht durch Verteilung der Flüssigkeit mit einem pinselartigen Strukturwerkzeug hergestellt wird.

Es wird vorgeschlagen, dass das Strukturwerkzeug von einem Pinsel mit einer Breite gebildet ist, die größer ist als die Breite der Fronteinheit Unter einer "Fronteinheit" soll insbesondere eine Einheit verstanden werden, die von einem Bediener in beliebigem betriebsbereitem Zustand unmittelbar berührt werden kann. Insbesondere bildet die Fronteinheit eine Begrenzung, insbesondere eine obere oder eine seitliche Begrenzung, der Kochfeldvorrichtung und vorzugsweise eines Kochfelds, das die Kochfeldvorrichtung aufweist. Unter "teilweise transparent" soll insbesondere verstanden werden, dass die Fronteinheit zumindest teilweise, insbesondere zu mindestens 10 %, vorteilhaft zu mindestens 40 %, besonders vorteilhaft zu mindestens 70 %, vorzugsweise zu mindestens 90 %, von zumindest einem Material gebildet ist, das in zumindest 0,5 %, insbesondere zumindest 3 %, vorteilhaft zumindest 10 %, besonders vorteilhaft zumindest 30 %, vorzugsweise zumindest 80 %, der Wellenlängen des sichtbaren Lichts, insbesondere der Wellenlängen zwischen 380 nm und 780 nm, eine Transparenz von zumindest 10 %, insbesondere zumindest 30 %, vorteilhaft zumindest 50 %, vorzugsweise zumindest 80 %, aufweist. Unter einer "Plattenfronteinheit" soll insbesondere eine Fronteinheit verstanden werden, die plattenartig ausgebildet ist. Darunter, dass die Fronteinheit "plattenartig" ausgebildet ist, soll insbesondere verstanden werden, dass die Fronteinheit entlang einer der Hauptträgheitsachsen eine maximale Erstreckung aufweist, die maximal 50 %, insbesondere maximal 20 %, vorteilhaft maximal 10 %, vorzugsweise maximal 5 %, von maximalen Erstreckungen entlang der anderen beiden Hauptträgheitsachsen aufweist. Unter einer "Erstreckung" eines Objekts entlang einer Achse soll insbesondere ein Maximum von Abständen beliebiger zweier Ebenen verstanden werden, die jeweils senkrecht zu der Achse orientiert sind und jeweils zumindest einen Punkt des Objekts schneiden. Insbesondere gibt es zumindest eine Ebene, so dass zumindest 75 %, insbesondere zumindest 90 %, vorteilhaft zumindest 95 %, vorzugsweise zumindest 98 % der Fronteinheit weniger als 1 cm, insbesondere weniger als 0,5 cm, vorteilhaft weniger als 0,3 cm, von der Ebene beabstandet sind. Insbesondere weist eine Oberfläche der Fronteinheit, auf der die Strukturschicht angeordnet ist, eben, vorzugsweise glatt, ausgebildet. Insbesondere ist die Oberfläche einen Mittenrauwert Rₐ von maximal 1 µm, insbesondere von maximal 0,5 µm, vorteilhaft von maximal 0,1 µm, vorzugsweise von maximal 0,05 µm, auf. Unter einem "Teilbereich" soll insbesondere ein Bereich der Oberfläche der Fronteinheit verstanden werden, dessen Fläche zumindest 5 %, insbesondere zumindest 10 %, vorteilhaft zumindest 20 %, besonders vorteilhaft zumindest 40 %, vorzugsweise zumindest 80 %, einer Fläche einer Seite der Fronteinheit entspricht. Insbesondere beträgt eine Fläche des Teilbereichs zumindest 5 %, insbesondere zumindest 10 %, vorteilhaft zumindest 30 %, vorzugsweise zumindest 40 %, einer kompletten Oberfläche der Fronteinheit.

Unter einer "Strukturschicht" soll insbesondere eine Schicht verstanden werden, die dazu vorgesehen ist, eine strukturierte Oberfläche bereitzustellen. Insbesondere ist die Strukturschicht dazu vorgesehen, bei Lichteinfall entlang zumindest einer Einfallsebene im remittierten Licht einen Anteil diffus reflektierten Lichts von zumindest 20 %, insbesondere zumindest 50 %, vorzugsweise zumindest 70 %, zu erzeugen. Unter "vorgesehen" soll insbesondere speziell ausgelegt und/oder ausgestattet verstanden werden. Unter einer "strukturierten Oberfläche" soll insbesondere eine Oberfläche verstanden werden, die entlang zumindest einer Richtung entlang einer Oberfläche der Strukturschicht einen Rauigkeitskennwert von zumindest 0,05, insbesondere zumindest 0,1, vorteilhaft zumindest 0,2, aufweist. Unter einem "Rauigkeitskennwert" entlang einer Richtung soll insbesondere ein Verhältnis von einem Mittelwert von Mittenrauwerten Rₐ entlang von beliebigen zu der Richtung parallelen Strecken auf der Oberfläche der Strukturschicht zu einer Dicke der Strukturschicht verstanden werden, wobei die Strecken eine Länge aufweisen, die maximal einem 100-fachen, insbesondere maximal einem 50-fachen, vorteilhaft maximal einem 20-fachen, vorzugsweise maximal einem zehnfachen, der Dicke der Strukturschicht entspricht und wobei eine Länge der Strecken zumindest einem zweifachen, insbesondere zumindest einem vierfachen, vorteilhaft zumindest einem achtfachen, der Dicke der Strukturschicht entspricht. Unter einer "Dicke" der Strukturschicht soll insbesondere ein Maximum der Abstände von Punkten der Strukturschicht zu der Fronteinheit verstanden werden. Insbesondere beträgt eine minimale lokale Dicke maximal 50 %, insbesondere maximal 25 %, vorteilhaft maximal 10 %, vorzugsweise maximal 5 %, der Dicke der Strukturschicht. Insbesondere beträgt die Dicke der Strukturschicht zumindest 1 µm, insbesondere zumindest 10 µm, vorteilhaft zumindest 100 µm. Vorteilhaft beträgt eine Dicke der Strukturschicht maximal 2 mm, insbesondere maximal 1 mm, vorteilhaft maximal 0,3 mm. Unter einer "lokalen Dicke" der Strukturschicht an einem Punkt der Oberfläche der Fronteinheit soll insbesondere eine Erstreckung der Strukturschicht entlang einer Geraden verstanden werden, die den Punkt schneidet und senkrecht auf der Oberfläche steht, auf der die Strukturschicht angeordnet ist. Unter einer "Erstreckung" entlang einer Geraden soll insbesondere eine Länge einer längsten Strecke verstanden werden, die auf der Geraden und innerhalb der Strukturschicht liegt. Vorzugsweise weist die Strukturschicht entlang zumindest einer Richtung entlang der Oberfläche einen Rauigkeitskennwert von maximal 0,05, insbesondere maximal 0,01, vorteilhaft maximal 0,005, auf. Vorzugsweise ist die Strukturschicht zumindest teilweise transparent. Insbesondere weist die Strukturschicht entlang zumindest einer Richtung eine Rauheit auf, die mit einer Rauheit von Schleifpapier mit einer Körnung von zumindest 1, insbesondere zumindest 10, vorteilhaft zumindest 100, vergleichbar ist. Unter einer "Flüssigkeit" soll insbesondere ein Fluid mit einer Viskosität von zumindest 10 mPa·s, insbesondere zumindest 100 mPa·s, vorteilhaft von zumindest 1 Pa·s, und insbesondere mit einer Viskosität von maximal 100 Pa·s, vorteilhaft maximal 10 Pa·s, verstanden werden. Vorzugsweise ist die Flüssigkeit dazu vorgesehen, sich durch zumindest eine chemische Reaktion und/oder durch eine Verflüchtigung von zumindest einem Bestandteil der Flüssigkeit, insbesondere einem Lösungsmittel und/oder Wasser, insbesondere durch Verdunstung, zu verfestigen, wobei insbesondere die Viskosität der Flüssigkeit auf einen Wert größer als 1 kPa·s, insbesondere größer als 100 kPa·s, vorteilhaft größer als 10 MPa·s, vorzugsweise größer als 1 GPa·s, ansteigt. Vorzugsweise unterscheidet sich die Strukturschicht von einer aufgedruckten Schicht. Vorzugsweise weist die Strukturschicht in ausgehärtetem Zustand eine hohe Temperaturstabilität, einen Schmelzpunkt von zumindest 300 °C, insbesondere von zumindest 500 °C, und/oder einen thermischen Ausdehnungskoeffizienten von maximal 10⁻⁴/K, insbesondere von maximal 10⁻⁵/K, vorzugweise von maximal 0,5-10⁻⁵/K, auf. Es kann insbesondere eine einfache, preiswerte, schnelle und/oder effiziente Produktion ermöglicht werden.

Weiterhin wird vorgeschlagen, dass die Flüssigkeit von einer Sol-Gel-Lösung gebildet ist. Unter einer Sol-Gel-Lösung soll insbesondere eine kolloidale Suspension, insbesondere ein Sol, verstanden werden, die dazu vorgesehen ist, durch Gelbildung zu verfestigen. Unter einer "Gelbildung" soll insbesondere eine Koagulation eines suspendierten und/oder gelösten Stoffs verstanden werden, durch die ein Gel, d. h. eine dreidimensionale Matrix eines Feststoffs mit Poren, in denen eine Flüssigkeit und/oder ein Gas enthalten ist, entsteht und/oder eine Veränderung eines Flüssigkeits- und/oder Gasanteils, welcher in den Poren enthalten ist. Insbesondere ist die Strukturschicht nach einer Gelierung der Sol-Gel-Lösung dazu vorgesehen, insbesondere unterstützt durch erhöhte Temperatur, beispielsweise in einem Ofen, getrocknet zu werden, um vor einer weiteren Bearbeitung überschüssiges Lösungsmittel, insbesondere Wasser, auszutreiben. Alternativ wird vorgeschlagen, dass die Flüssigkeit von einem Lack, insbesondere einem Acryllack, gebildet ist. Weiterhin sind andere, dem Fachmann als geeignet erscheinende Flüssigkeiten, insbesondere Farben, Gele und/oder Lacke, denkbar. Es kann insbesondere eine Strukturschicht mit hoher Temperaturresistenz bereitgestellt werden. Insbesondere kann mit der Sol-Gel-Lösung eine gute Verbindung mit zumindest glasartigen Materialien hergestellt werden.

Unter einem Strukturwerkzeug soll insbesondere ein Werkzeug verstanden werden, dessen Form dazu geeignet ist, eine Strukturschicht zu erzeugen. Insbesondere ist das Strukturwerkzeug pinselartig, vorzugsweise mit flexiblen Haaren aus Silikon und/oder Kunststoff, ausgebildet. Unter "flexibel" soll verstanden werden, dass sich die Haare ohne wesentlichen Kraftaufwand, insbesondere mit einer

Kraft von unter 0,1 N, auf einen Radius von maximal 10 mm, insbesondere maximal 5 mm, vorteilhaft maximal 1 mm, biegen lassen. Insbesondere weisen die Haare eine Dicke von maximal 1 mm, insbesondere maximal 0,5 mm, vorteilhaft maximal 0,2 mm, vorzugsweise maximal 0,1 mm, auf. Insbesondere weisen die Haare eine Länge von zumindest 1 cm, insbesondere zumindest 2 cm, vorteilhaft zumindest 4 cm, auf. Alternativ ist das Strukturwerkzeug kammartig mit unflexiblen Zinken ausgebildet. Unter "unflexibel" soll insbesondere verstanden werden, dass die Zinken zumindest gegenüber einer Kraft in einer Richtung quer zu einer Längserstreckung der Zinken zumindest im Wesentlichen starr ausgebildet sind. Weiterhin sind spachtelartige Strukturwerkzeuge denkbar. Es kann insbesondere eine einfache und/oder preiswerte Strukturierung erreicht werden.

Insbesondere ist die Fronteinheit als Kochfeldplatte ausgebildet. Unter einer "Kochfeldplatte" soll insbesondere eine Fronteinheit verstanden werden, die dazu vorgesehen ist, zu erwärmendes Gargeschirr während einer Erwärmung zu tragen. Insbesondere ist die Kochfeldplatte zwischen zumindest einem, insbesondere induktiven, Heizelement eines Kochfelds und dem zu erwärmenden Gargeschirr angeordnet. Vorzugsweise ist die Kochfeldplatte zumindest in einem Betriebszustand horizontal orientiert. Bei großen Flächen, wie sie bei Kochfeldplatten auftreten, ist die Erzeugung der Strukturschicht aus einer Flüssigkeit vorteilhaft besonders effizient einsetzbar. Alternativ oder zusätzlich ist es denkbar, dass die Fronteinheit als Blende, beispielsweise einer Bedieneinheit eines Kochfelds, ausgebildet ist.

Weiterhin wird vorgeschlagen, dass die Fronteinheit zumindest großteils, insbesondere zu mindestens 30 %, vorteilhaft zu mindestens 60 %, vorzugsweise zu mindestens 90 %, von einem zumindest glasartigen Material gebildet ist. Unter einem "glasartigen" Material soll insbesondere ein Material verstanden werden, das eine hohe Transparenz, insbesondere von zumindest 60 %, vorteilhaft zumindest 80 %, vorzugsweise zumindest 90 %, aufweist. Insbesondere weist ein glasartiges Material zumindest teilweise, insbesondere zu mindestens 30 %, eine amorphe Struktur auf. Insbesondere weist ein glasartiges Material eine Zugfestigkeit von zumindest 10 MPa, insbesondere zumindest 20 MPa, vorzugsweise zumindest 25 MPa, auf. Insbesondere weist ein glasartiges Material eine Druckfestigkeit von zumindest 100 MPa, insbeosondere zumindest 300 MPa, vorzugsweise zumindest 600 MPa, auf. Insbesondere weist ein glasartiges Material ein E-Modul von zumindest 10 GPa, insbesondere zumindest 30 GPa, vorzugsweise zumindest 50 GPa, auf. Vorzugsweise weist ein glasartiges Material einen thermischen Ausdehnungskoeffizienten von maximal 10⁻⁴/K, insbesondere von maximal 10⁻⁵/K, vorzugsweise von maximal 0,5 * 10⁻⁵/K, auf. Vorteilhaft weist ein glasartiges Material eine Schmelztemperatur von zumindest 300 °C, insbesondere zumindest 500 °C, auf. Insbesondere ist das glasartige Material als Polymer, insbesondere als Plexiglas, ausgebildet. Vorzugsweise ist das glasartige Material zu mindestens 60 % von Quarz gebildet. Insbesondere ist das glasartige Material als Borsilikatglas und/oder als Glaskeramik ausgebildet. Insbesondere ist das glasartige Material von Cordierit oder einem vergleichbaren keramischen Material gebildet. Es kann insbesondere eine hohe Stabilität und/oder Steifigkeit der Fronteinheit erreicht werden.

Ferner wird vorgeschlagen, dass die Strukturschicht auf einer Rückseite der Fronteinheit angeordnet wird. Unter einer "Rückseite" der Fronteinheit soll insbesondere eine Seite der Fronteinheit verstanden werden, die in einem Betriebszustand einem Bediener abgewandt ist. Es kann insbesondere vorteilhaft ein Anteil spiegelnder Reflexion der Fronteinheit vermindert werden, ohne eine einem Bediener zugewandte Seite, eine Sichtseite, zu beeinträchtigen.

Weiterhin wird vorgeschlagen, dass die Kochfeldvorrichtung zumindest eine erste Beschichtung aufweist, die zumindest teilweise auf der Strukturschicht aufgebracht -wird. Insbesondere weist die Beschichtung eine Reflektivität, insbesondere für zumindest 20 %, insbesondere zumindest 40 %, vorteilhaft zumindest 80 %, der Wellenlängen des sichtbaren Lichts zwischen 380 nm und 780 nm, von zumindest 10 %, insbesondere zumindest 20 %, vorteilhaft zumindest 40 %, vorzugsweise zumindest 80 %, auf. Vorzugsweise ist die Beschichtung zumindest teilweise metallisch. Insbesondere weist die Beschichtung eine Dicke von weniger als 5 µm, insbesondere von weniger als 1 µm, vorteilhaft von weniger als 500 nm, auf. Insbesondere ist die Beschichtung dazu vorgesehen, bei Beleuchtung einen metallischen Glanz zu erzeugen. Es kann insbesondere ein erhöhter Komfort erreicht werden. Durch die erfindungsgemäße Umsetzung kann insbesondere ein Anteil einer spiegelnden, einen Bediener evtl. irritierenden, Reflexion der Beschichtung verringert werden.

Insbesondere wird die Beschichtung als Vielschichtstruktur ausgebildet. Unter einer "Vielschichtstruktur" soll insbesondere eine Folge von zumindest zwei, insbesondere zumindest drei, vorteilhaft zumindest vier, vorzugsweise zumindest fünf, Schichten verstanden werden. Insbesondere ist dabei eine Dicke einer dünnsten Schicht der Vielschichtstruktur größer als 0,5 %, insbesondere größer als 1 %, vorteilhaft größer als 2 %, besonders vorteilhaft größer als 5 %, vorzugsweise größer als 10 %, einer Dicke einer dicksten Schicht der Vielschichtstruktur. Insbesondere weist jede Schicht der Vielschichtstruktur eine Dicke auf, die kleiner ist als 2 µm, insbesondere kleiner ist als 1,5 µm, vorzugsweise kleiner ist als 1 µm, und insbesondere größer ist als 1 nm, vorteilhaft größer ist als 2 nm, vorzugsweise größer ist als 4 nm. Insbesondere weist die Vielschichtstruktur eine Dicke auf, die kleiner ist als 2 µm, insbesondere kleiner ist als 1,5 µm, vorzugsweise kleiner ist als 1 µm, und insbesondere größer ist als 3 nm, vorteilhaft größer ist als 6 nm, vorzugsweise größer ist als 9 nm. Insbesondere ist die Vielschichtstruktur abwechselnd von isolierenden und metallischen Schichten gebildet. Insbesondere ist die Vielschichtstruktur ausschließlich aus isolierenden Schichten gebildet, um einen Einfluss durch Induktionsheizelemente zu verringern. Vorzugsweise weist die Vielschichtstruktur eine metallische und eine isolierende Schicht auf, wobei die metallische Schicht an der Strukturschicht anliegt.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Kochfeld in einer schematischen Ansicht,
- Fig. 2: einen Schnitt entlang der Linie II-II in Figur 1 und
- Fig. 3: eine Herstellung einer Strukturschicht in schematischer Darstellung.

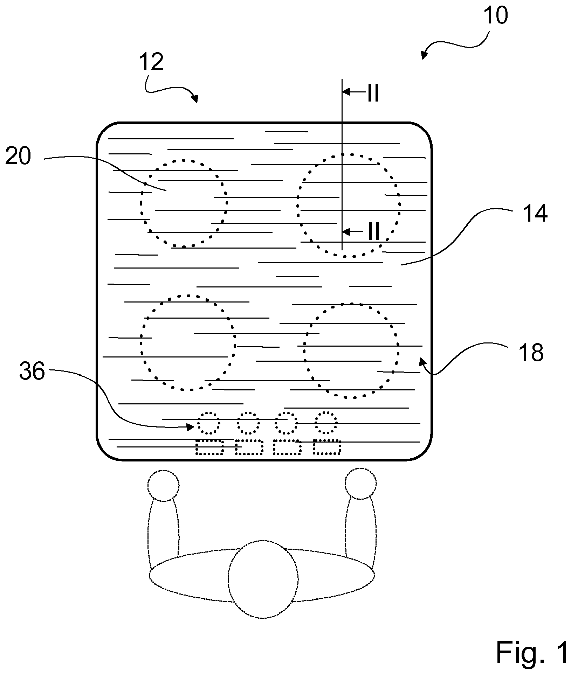

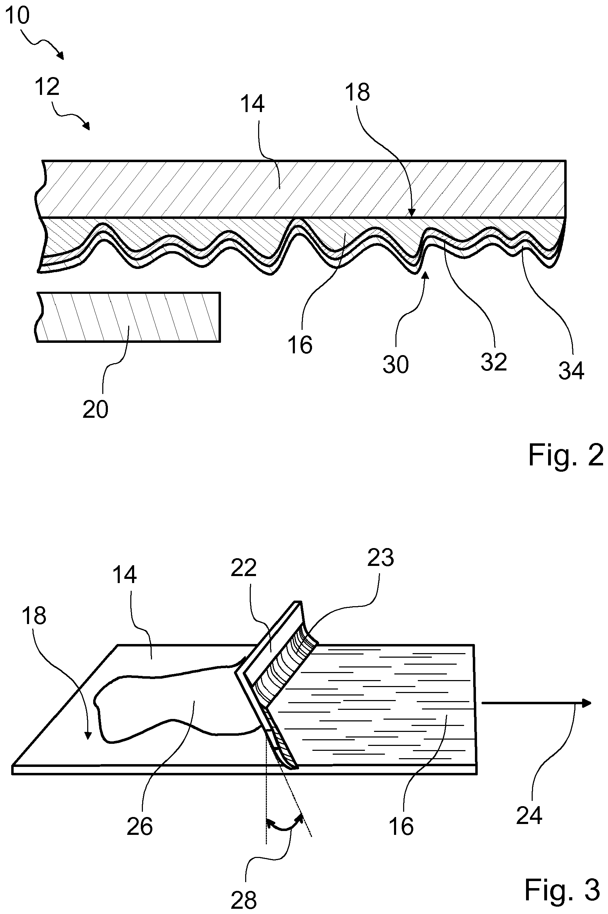

Fig. 1 zeigt ein Kochfeld 10 mit einer Kochfeldvorrichtung 12. Die Kochfeldvorrichtung 12 weist eine transparente Fronteinheit 14 auf, die plattenartig ausgebildet ist. Die Fronteinheit 14 ist als Kochfeldplatte ausgebildet. Die Fronteinheit 14 ist von einem glasartigen Material gebildet. Die Fronteinheit 14 ist von transparentem Borsilikatglas gebildet. Weiterhin weist die Kochfeldvorrichtung 12 eine Strukturschicht 16 auf, die auf einem Teilbereich der Fronteinheit 14 angeordnet ist (Figur 2). Die Strukturschicht 16 ist auf einer Rückseite 18 der Fronteinheit 14 angeordnet. Die Rückseite 18 und eine Sichtseite der Fronteinheit 14 sind planparallel angeordnet und weisen eine spiegelglatte Oberfläche auf. Die Sichtseite der Fronteinheit 14 ist dazu vorgesehen, Gargeschirr (nicht dargestellt) zu einer Erwärmung durch ein induktives Heizelement 20 zu tragen.

Die Strukturschicht 16 ist durch Auftragung einer Flüssigkeit 26 auf die Fronteinheit 14 gebildet. Die Flüssigkeit 26 weist eine Viskosität von 2 Pa·s auf. Die Flüssigkeit 26 ist von einer Sol-Gel-Lösung gebildet. Die Sol-Gel-Lösung ist von einer Suspension mit einem Volumenanteil von ca. 13 % Silizium und ca. 26 % Quarz gebildet. Weiterhin weist die Sol-Gel-Lösung einen Wasseranteil von ca. 60 % auf. Sowohl das Silizium als auch der Quarz liegen in kleinen Partikeln vor. Partikel des Siliziums weisen eine mittlere Größe von ca. 20 nm auf. Partikel des Quarzes weisen eine mittlere Größe von ca. 15 µm auf. Die Strukturschicht 16 ist durch Verteilung der Flüssigkeit 26 mit einem Strukturwerkzeug 22 (Figur 3) hergestellt. In alternativen Ausführungen variiert eine Viskosität der Flüssigkeit zwischen 10 mPa·s und 10 Pa·s. Insbesondere variiert eine Viskosität der Sol-Gel-Lösung zwischen 100 mPa·s und 5 Pa·s.

Die Fronteinheit 14 ist dazu vorgesehen, bei einer Herstellung der Kochfeldvorrichtung 12 auf einer Transportstrecke, insbesondere einem Förderband oder einer geeigneten Alternative, befördert zu werden. In einer ersten Station wird die Flüssigkeit 26 dosiert auf die spätere Rückseite 18 gegeben. In einer zweiten Station ist das Strukturwerkzeug 22 angeordnet. Das Strukturwerkzeug 22 ist pinselartig ausgebildet. Das Strukturwerkzeug 22 ist von einem Pinsel mit einer Breite gebildet, die größer ist als eine Breite der Fronteinheit 14. Die Fronteinheit 14 wird dabei unter dem stationären Strukturwerkzeug 22 hindurchgeschoben. Das Strukturwerkzeug 22 verteilt dabei die Flüssigkeit 26 auf der Fronteinheit 14 und hinterlässt eine, einer Maserung ähnliche, Struktur in der Flüssigkeit 26. Das Strukturwerkzeug 22 ist dabei in einer Ansicht von oben pfeilartig ausgebildet und zeigt gegen eine Transportrichtung 24, die durch die Transportstrecke gegeben ist. Durch die pfeilartige Ausbildung kann eine gute laterale Verteilung der Flüssigkeit 26 erreicht werden. Das Strukturwerkzeug 22 ist um einen Winkel 28 von 30° geneigt, um eine gleichmäßige Struktur zu erzeugen. Haare des Strukturwerkzeugs 22 weisen eine Länge von 4 cm und eine Dicke von 50 µm auf. Die Haare des Strukturwerkzeugs 22 sind von Kunststoff gebildet, um eine hohe Gleichmäßigkeit und eine hohe Sauberkeit zu erreichen. Alternativ sind Ausgestaltungen denkbar, in denen mehrere, insbesondere auch unterschiedliche, Strukturwerkzeuge hintereinander und/oder nebeneinander angeordnet sind. In einem dritten Schritt wird die Strukturschicht 16 getrocknet. Um eine erhöhte Geschwindigkeit zu erreichen, kann eine Trocknung dabei durch eine erhöhte Temperatur, insbesondere erzeugt durch Strahlungslampen, und/oder durch eine abgesenkte Luftfeuchtigkeit beschleunigt werden. Durch die Art der Flüssigkeitsaufbringung ergibt sich in einer Richtung quer zur Transportrichtung 24 ein Rauigkeitskennwert, der mehr als zehnmal, insbesondere mehr als 100-mal, so groß ist wie ein Rauigkeitskennwert entlang der Transportrichtung 24. Durch, insbesondere periodische, Bewegung, insbesondere Rütteln, des Strukturwerkzeugs 22, vorzugsweise quer zur Transportrichtung 24, kann ein Rauigkeitskennwert in Transportrichtung 24 erhöht werden.

Die fertig getrocknete Strukturschicht 16 ist transparent für sichtbares Licht. Die Strukturschicht 16 erstreckt sich über die gesamte Rückseite 18 der Fronteinheit 14. In einem weiteren Fertigungsschritt wird eine Beschichtung 30 auf die Strukturschicht 16 aufgebracht. Die Beschichtung 30 ist als Vielschichtstruktur ausgebildet. Die Vielschichtstruktur ist gebildet von einer metallischen Schicht 32 und einer isolierenden Schicht 34. Die metallische Schicht 32 weist eine Dicke von 500 nm auf und ist von Edelstahl gebildet. Die isolierende Schicht 34 weist eine Dicke von 100 nm auf und ist von Zinnoxid gebildet. Die Schichten 32, 34 sind durch ein Sputterverfahren aufgetragen.

Die Fronteinheit 14 ist derart in dem Kochfeld 10 verbaut, dass ein Bediener aus einer Standardbedienposition, also einer Position von der eine Bedieneinheit 36 des Kochfelds 10 kontrolliert bedienbar ist, quer auf die Maserung der Strukturschicht 16 blickt. Das Strukturwerkzeug 22 ist dazu vorgesehen, regelmäßig zu einer Reinigung gewechselt zu werden, um eine gleichmäßige Strukturierung zu erreichen.

In einer nicht erfindungsgemäßen Alternative, kann anstatt einer Strukturerzeugung mit Strukturwerkzeug eine Gießvorrichtung verwendet werden, die eine Flüssigkeit auf eine Fronteinheit aufträgt, auf eine gesamte Breite der Fronteinheit ausgelegt sein und über diese gesamte Breite an unterschiedlichen Positionen unterschiedliche Mengen der Flüssigkeit auftragen. Insbesondere weist die Gießvorrichtung dazu Blockiermittel auf, die an verschiedenen Stellen ein Gießen verhindern.

### Bezugszeichen

- 10: Kochfeld
- 12: Kochfeldvorrichtung
- 14: Fronteinheit
- 16: Strukturschicht
- 18: Rückseite
- 20: induktives Heizelement
- 22: Strukturwerkzeug
- 23: Haare
- 24: Transportrichtung
- 26: Flüssigkeit
- 28: Winkel
- 30: Beschichtung
- 32: Schicht
- 34: Schicht
- 36: Bedieneinheit

## Patentansprüche

1. Verfahren zur Herstellung einer Kochfeldvorrichtung (12) mit zumindest einer zumindest teilweise transparenten Fronteinheit (14), insbesondere Plattenfronteinheit, und zumindest einer Strukturschicht (16), die auf zumindest einem Teilbereich der Fronteinheit (14) angeordnet und dazu vorgesehen ist, eine strukturierte Oberfläche bereitzustellen, wobei die Strukturschicht (16) durch Auftragung einer Flüssigkeit (26) auf die Fronteinheit (14) gebildet wird, **dadurch gekennzeichnet, dass** die Strukturschicht (16) durch Verteilung der Flüssigkeit (26) mit einem pinselartigen Strukturwerkzeug (22) hergestellt wird, wobei das Strukturwerkzeug (16) von einem Pinsel mit einer Breite gebildet ist, die größer ist als die Breite der Fronteinheit (14).

2. Verfahren zur Herstellung einer Kochfeldvorrichtung (12) nach Anspruch 1, **dadurch gekennzeichnet, dass** die Flüssigkeit (26) von einer Sol-Gel-Lösung gebildet ist.

3. Verfahren zur Herstellung einer Kochfeldvorrichtung (12) nach einem der vorhergehenden Ansprüche, **dadurch gekennzeichnet, dass** die Fronteinheit (14) als Kochfeldplatte ausgebildet ist.

4. Verfahren zur Herstellung einer Kochfeldvorrichtung (12) nach einem der vorhergehenden Ansprüche, **dadurch gekennzeichnet, dass** die Fronteinheit (14) zumindest großteils von einem zumindest glasartigen Material gebildet ist.

5. Verfahren zur Herstellung einer Kochfeldvorrichtung (12) nach einem der vorhergehenden Ansprüche, **dadurch gekennzeichnet, dass** die Strukturschicht (16) auf einer Rückseite der Fronteinheit (14) angeordnet wird.

6. Verfahren zur Herstellung einer Kochfeldvorrichtung (12) nach einem der vorhergehenden Ansprüche, **dadurch gekennzeichnet, dass** zumindest eine erste Beschichtung (30) zumindest teilweise auf der Strukturschicht (16) aufgebracht wird.

7. Verfahren zur Herstellung einer Kochfeldvorrichtung (12) nach Anspruch 6, **dadurch gekennzeichnet, dass** die Beschichtung (30) als Vielschichtstruktur ausgebildet wird.

## Claims

1. Method for manufacturing a cooking hob (12) with at least one at least partially transparent front unit (14), in particular plate front unit, and at least one structural layer (16), which is arranged on at least one subregion of the front unit (14) and is provided to supply a structured surface, wherein the structural layer (16) is formed by applying a liquid (26) to the front unit (14), **characterised in that** the structural layer (16) is manufactured by distributing the liquid (26) with a brush-type structural tool (22), wherein the structural tool (16) is formed of a brush with a width which is greater than the width of the front unit (14).

2. Method for manufacturing a cooking hob (12) according to claim 1, **characterised in that** the liquid (26) is formed of a sol-gel solution.

3. Method for manufacturing a cooking hob (12) according to one of the preceding claims, **characterised in that** the front unit (14) is embodied as a hotplate.

4. Method for manufacturing a cooking hob (12) according to one of the preceding claims, **characterised in that** the front unit (14) is formed at least predominantly of an at least glass-type material.

5. Method for manufacturing a cooking hob (12) according to one of the preceding claims, **characterised in that** the structural layer (16) is arranged on a rear of the front unit (14).

6. Method for manufacturing a cooking hob (12) according to one of the preceding claims, **characterised in that** at least one first coating (30) is applied at least partially to the structural layer (16).

7. Method for manufacturing a cooking hob (12) according to claim 6, **characterised in that** the coating (30) is embodied as a multi-layer structure.

## Revendications

1. Procédé de fabrication d'un appareil de table de cuisson (12) comportant au moins un panneau frontal (14), notamment un panneau frontal sous forme de plaque, au moins partiellement transparent, et au moins une couche de structure (16) agencée sur au moins une partie du panneau frontal (14) et qui est destinée à fournir une surface structurée, dans lequel la couche de structure (16) est formée par application d'un liquide (26) sur le panneau frontal (14),
**caractérisé en ce que** la couche de structure (16) est fabriquée par distribution du liquide (26) avec un outil de structure (22) de type pinceau, l'outil de structure (16) étant formé d'un pinceau ayant une largeur qui est supérieure à la largeur du panneau frontal (14).

2. Procédé de fabrication d'un appareil de table de cuisson (12) selon la revendication 1, **caractérisé en ce que** le liquide (26) est constitué d'une solution sol-gel.

3. Procédé de fabrication d'un appareil de table de cuisson (12) selon l'une des revendications précédentes, **caractérisé en ce que** le panneau frontal (14) est formé d'une plaque de cuisson.

4. Procédé de fabrication d'un appareil de table de cuisson (12) selon l'une des revendications précédentes, **caractérisé en ce que** le panneau frontal (14) est constitué au moins majoritairement d'un matériau au moins de type verre.

5. Procédé de fabrication d'un appareil de table de cuisson (12) selon l'une des revendications précédentes, **caractérisé en ce que** la couche de structure (16) est disposée sur une face arrière du panneau frontal (14).

6. Procédé de fabrication d'un appareil de table de cuisson (12) selon l'une des revendications précédentes, **caractérisé en ce qu'**au moins un premier revêtement (30) est appliqué au moins en partie sur la couche de structure (16).

7. Procédé de fabrication d'un appareil de table de cuisson (12) selon la revendication 6, **caractérisé en ce que** le revêtement (30) est formé d'une structure multicouche.
